# EUROPÄISCHE PATENTSCHRIFT

(11) **EP 0 635 463 B1**
(45) Veröffentlichungstag und Bekanntmachung des Hinweises auf die Patenterteilung: **07.10.1998**
(21) Anmeldenummer: 94110719.5
(22) Anmeldetag: 10.07.1994
(51) Int. Cl.: C04B 24/12, C23F 11/14

(54) **Verwendung und Verfahren unter Verwendung eines Zusatzmittels zur Verhinderung der Korrosion von Metallen in Baustoffen**
Use of and method of applying an Additive for the prevention of metal corrosion in building materials
Utilisation et procédé d'utiliser un Additif pour empêcher la corrosion des métaux dans les matériaux de construction

(30) Priorität: 19.07.1993 CH 2180/93
(43) Veröffentlichungstag der Anmeldung: 25.01.1995
(73) Patentinhaber: Sika AG, vorm. Kaspar Winkler & Co., CH-8048 Zürich (CH)
(72) Erfinder: Bürge, Theodor A., CH-8954 Geroldswil (CH); Mäder, Urs, Dr., CH-8500 Frauenfeld (CH)
(74) Vertreter: Blum, Rudolf Emil Ernst

(56) Entgegenhaltungen:
- EP-A- 0 247 773
- CH-A- 432 334
- GB-A- 2 147 296
- CHEMICAL ABSTRACTS, vol. 115, no. 10, 9. September 1991, Columbus, Ohio, US; abstract no. 98048n, T. FROELICH ET AL 'Superplasticizer for concrete mixtures' Seite 360 ; & PL-A-148 876 (INSTYTUT PRZEMYSLU ORGINICZNEGO)
- CHEMICAL ABSTRACTS, vol. 82, no. 22, 2. Juni 1975, Columbus, Ohio, US; abstract no. 144281h, K. KODAMA ET AL Seite 283 ; & JP-A-7 501 120 (NISSO MASTERS BUILDERS CO., LTD.)

## Beschreibung

Die vorliegende Erfindung betrifft ein Zusatzmittel zur Verhinderung der Korrosion von Metallen, beispielsweise Metallarmierungen in Baustoffen, die anorganische Bindemittel enthalten, wie zum Beispiel Zement, Kalk, hydraulischen Kalk, Gips, sowie allenfalls weitere in Baustoffen übliche Bestandteile, wie Zuschlagstoffe, Siliciumdioxyd enthaltende Materialien, sowie allenfalls solche Zusatzstoffe, welche die Bearbeitung der Baustoffe und/oder die Gebrauchseigenschaften verbessern.

Es ist seit vielen Jahrzehnten bekannt, dass anorganische Bindemittel, wie Zement, insbesondere Portlandzement, die basische Eigenschaften besitzen, eisenenthaltende Metalle vor Rost schützen. Durch diesen rostschützenden Effekt wurde überhaupt erst der Stahlbeton möglich, bei welchem Stahlarmierungen im Zementbeton eingebettet und durch die Wirkung des Zements ohne sonstigen Schutzanstrich dauerhaft gegen Rost geschützt sind.

Die rostschützende Wirkung des Zements wird auf das bei der Hydratation sich abspaltende Calciumhydroxd zurückgeführt, welches einen hohen pH-Wert von 12 und mehr im Innern des Zementsteins verursacht.

Durch Karbonatisierung, das heisst durch die Reaktion der Luftkohlensäure mit dem Calciumhydroxid kann der pH-Wert drastisch absinken. Bei pH-Werten unter 9 beginnt der Armierungsstahl im Beton zu korrodieren.

Die Korrosion wird beschleunigt durch Rissbildung im Baustoff oder durch Einfluss von Chloriden, herrührend aus verunreinigten Zuschlagstoffen, Tausalzen, Luftverunreinigung und Meerwasser.

Bisher ist jedoch noch kein Zusatzmittel bekannt geworden, durch das die Korrosion von Metallen in Baustoffen zuverlässig und während sehr langer Zeiträume verhindert werden kann, insbesondere bei Einwirkung ungünstiger Umweltbedingungen, zum Beispiel bei der Belastung durch Chloride.

### BESCHREIBUNG DES STANDES DER TECHNIK

Bisher wurden als Korrosionsinhibitoren in Zement enthaltenden Baustoffen hauptsächlich Alkalinitrite oder Erdalkalinitrite verwendet. Es sei in diesem Zusammenhang beispielsweise auf die USA Patentschriften 321 02 07, 38 01 338, 397 64 94 und 436 59 99 verwiesen. In dem US Patent 409 21 09 wird Calciumnitrit als Korrosionsinhibitor für armierten Beton vorgeschlagen.

Es ist jedoch bekannt, dass Nitrite und nitrithaltige Produkte eine hohe Toxizität und deren Umsetzungsprodukte insbesondere krebserzeunde Eigenschaften besitzen, und deshalb haben sich derartige Produkte auf dem Markt nur beschränkt durchgesetzt. Ausserdem sind Nitrite wasserlöslich und bleiben auch nach ihrer Einverleibung in die Baustoffe wasserlöslich, und sie können somit allmählich ausgewaschen werden. Ferner müssen sie in hohen Dosierungen eingesetzt werden, da sie bei der Passivierungsreaktion mit dem Metall verbraucht werden. Nach der Klassifikation der National Association of Corrosion Engineers (NACE) gehören Nitrite zu den rein anodisch wirkenden Inhibitoren.

In Chemical Abstracts, Band 115, Nr. 10, 9. September 1991, Columbus, Ohio, US, Seite 360, Abstract Nr. 98048n, werden Hochleistungsbetonverflüssiger für Betonmischungen beschrieben. Die entsprechenden Hochleistungsverflüssiger müssen vier unterschiedliche Komponenten enthalten, nämlich Aluminiumkomplexe von Hydroxycarbonsäuren in Form ihrer Alkalimetallsalze, ein Mono-, Di- oder Triethanolamin, ein Alkaliorthophosphat und ausserdem ein Alkalisulfat. Es wird erwähnt, dass durch die Einbringung dieses Hochleistungsbetonverflüssigers in die Betonmischung die Druckfestigkeit des Betons, seine Wasserdichtigkeit und seine Frostbeständigkeit erhöht werden kann, und dass ausserdem die Korrosion von Metallarmierungen durch die Zugabe dieses Hochleistungsbetonverflüssigers verhindert werden kann. Drei der insgesamt vier Komponenten der erwähnten Hochleistungsbetonverflüssiger enthalten jedoch Alkalimetallionen, und es ist für einen Fachmann auf diesem Gebiet bekannt, dass die Einbringung von Alkalimetallionen in eine Zementmatrix vermieden werden soll, weil diese Ionen einen negativen Effekt auf die Zementmatrix des Baustoffes ausüben.

In der britischen Patentanmeldung 2 147 296 werden Aminsalze beschrieben, die in solchen Zementzusammensetzungen nützlich sind, welche hydraulischen Zement enthalten. Die entsprechenden Aminsalze sind Reaktionsprodukte eines Amines mit einer solchen Mischung an aromatischen Carbonsäuren, die als Nebenprodukt bei dem Verfahren zur Herstellung von Phthalsäureanhydrid erhalten werden (siehe Anspruch 1). Die entsprechenden Aminsalze dienen als Hilfsmittel bei dem Vermahlen des Zementes, und durch die Beigabe dieser Salze werden die beim Mahlprozess frisch freigelegten Oberflächen mit dem Aminsalz der Mischung der aromatischen Carbonsäuren überzogen und dadurch eine Zusammenballung der durch den Mahlprozess gewonnenen Teilchen verhindert. Die Carbonsäurekomponente dieser Aminsalze ist toxisch, und durch die Einverleibung der Produkte in die Zementmatrix von Baustoffen werden Probleme bezüglich der Deponierung dieser unerwünschten Nebenprodukte verhindert. Die entsprechenden Aminsalze werden jedoch lediglich als Mahlhilfen zur Verbesserung des Vermahlens der Zementklinker zugesetzt, und sie werden deshalb und aufgrund ihrer Toxizität üblicherweise nur in einer Menge von 0,001 bis 1 Gew.-% an dem Aminsalz, bezogen auf das Gewicht des Zementes, beigegeben. Dieser Veröffentlichung ist kein Hinweis zu entnehmen, dass Zemente, welche diese Vermahlungshilfsmittel enthalten, irgendwelche günstigen Eigenschaften in dem Baumaterial ausüben.

Das Schweizer Patent 432 334 betrifft ein Verfahren zur Herstellung eines Mörtels, in welchem das anorganische Bindemittel Calciumsulfat ist. Es wird dabei ein Abbindeverzögerer und ausserdem eine Komponente mit hydrophoben Eigenschaften beigegeben, welche die Oberfläche der Calciumsulfatteilchen bedeckt und dadurch die Kristallisation derselben verzögert, nachdem das Wasser bei der Herstellung des Baustoffes zugesetzt worden ist. Die entsprechenden hydrophobierenden Mittel sind vorzugsweise paraffinische Kohlenwasserstoffe oder oberflächenaktive Mittel des kationischen Typs, wie Fettamine mit langen aliphatischen Ketten. Allenfalls können bei diesem Verfahren noch weitere Komponenten beigegeben werden, wie Dispergiermittel, gelbildende Mittel, Korrosionsinhibitoren, Fungizide und Komponente mit antiseptischer Wirkung. Als Korrosionsinhibitoren werden unter anderem N-Polyglycol-derivate von primären und sekundären Polyaminen erwähnt, die in ihrer Struktur aliphatische Ketten mit 8-22 Kohlenstoffatomen aufweisen (siehe beispielsweise Anspruch 8). Dieser Patentschrift kann jedoch kein Hinweis entnommen werden, dass irgendwelche Umsetzungsprodukte oder Salze von Aminen eine korrosionshemmende Wirkung besitzen.

In Chemical Abstracts, Band 82, Nr. 22, 2. Juni 1975, Columbus, Ohio, USA, Seite 283, Abstract Nr. 144281h werden Korrosionsinhibitoren für Mörtel und Beton beschrieben. Die entsprechenden Korrosionsinhibitoren sind Mischungen, welche 50-90 Gew.-Teile an Nitriten, 8-20 Gew.-Teile an anorganischen Phosphaten, 1-15 Gew.-Teile an Aldonsäuren oder deren Salzen und 1-15 Gew.-Teile an Diethanolamin enthalten. Speziell erwähnt wird dort eine Mischung aus Natriumnitrit, Natrium-hexametaphosphat, Natrium-aldonat und Triethanolamin. Die dort beschriebenen Korrosionsinhibitoren führen also zu den bekannten Gesundheitsrisiken, die von Nitriten hervorgerufen werden, und sie besitzen auch die Nachteile, die mit der Einbringung von Natriumionen in die Betonmatrix verbunden sind.

In der europäischen Patentanmeldung 247 773 wird ein Verfahren zur Behandlung von bereits ausgehärteten armierten Betonkonstruktionen beschrieben, bei dem in Risse oder in Löcher, die in die Betonkonstruktion eingebohrt wurden, solche Korrosionsinhibitoren eingebracht werden, welche die Fähigkeit besitzen, durch die poröse Struktur des Betons zu wandern, insbesondere an den Berührungsstellen zwischen den Metallarmierungen und dem gehärteten Beton. Dementsprechend müssen die dort verwendeten Inhibitoren in der Dampfphase der gehärteten Zementmatrix wandern können, damit sie zur Reparatur der bestehenden Betonkonstruktionen, beispielsweise Bauwerken, dienen können. Ueblicherweise befinden sich die Inhibitoren auf einem Formkörper, der als Trägermaterial dient.

In dem US Patent 4 726 914 wird eine Mischung aus einem Alkanolamin mit einem dreiwertigen oder vierwertigen Alkohol als Korrosionsschutz für Stahl verwendet, und in Spalte 3, Zeilen 1-4, wird darauf hingewiesen, dass ein entsprechendes Alkanolamin allein, nämlich Diethanolamin, keinen Korrosionsschutz gewährt. In dieser Patentschrift wird nur der Korrosionsschutz von Stahl alleine, nicht jedoch von Stahl untersucht, der sich in einem Baustoff befindet, der anorganische Bindemittel enthält.

Das kanadische Patent 1 258 473, hingegen, betrifft ein Verfahren zur Hemmung der Korrosion von Eisen und Stahl in Beton durch Zugabe eines wasserlöslichen Hydroxyalkylamines. Die entsprechenden Hydroxyalkylamine sind vorzugsweise der einzige Bestandteil des Korrosionsinhibitors und sie sind vorzugsweise unbeschränkt mit Wasser mischbar (siehe Seite 6, Zeilen 7 bis 9 von oben, beziehungsweise vorletzte und letzte Zeile der Seite 6).

In diesem kanadischen Patent ist nirgends ein Hinweis enthalten, dass statt der dort beschriebenen Hydroxyalkylamine auch Salze derselben dem Beton zugesetzt werden könnten.

Ziel der vorliegenden Erfindung war es, ein Zusatzmittel zur Verhinderung der Korrosion von Metallen in Baustoffen zur Verfügung zu stellen, das während langer Zeiträume Metalle, die in entsprechende Baustoffe auf Basis von anorganischen Bindemitteln eingebettet sind, gegen Korrosion schützen. Ueberraschenderweise zeigte es sich, dass diese Ziele durch ein Zusatzmittel erreicht werden können, das als Korrosionsinhibitor ein Umsetzungsprodukt aus Aminen mit Säuren enthält oder das aus diesem besteht.

### BESCHREIBUNG DER ERFINDUNG

Ein Gegenstand der vorliegenden Erfindung ist die Verwendung eines Zusatzmittels zur Verhinderung der Korrosion von Metallen, beispielsweise Metallarmierungen, in Baustoffen, die anorganische Bindemittel enthalten wobei das Zusatzmittel dadurch gekennzeichnet ist, dass dieser Korrosionsinhibitor eine salzartige Verbindung aus Aminen mit Säuren enthält oder daraus besteht.

Ein wesentlicher Vorteil der in den erfindungsgemäß verwendeten Zusatzmitteln enthaltenen Korrosionsinhibitoren, die Umsetzungsprodukte aus Aminen und Säuren sind, besteht darin, dass diese anodisch wirkende und katodisch wirkende Korrosionsinhibitoren sind, welche die Auflösung des Metalles an der Anode unter Bildung schwerlöslicher Verbindungen vermindern oder verhindern und ferner das Metall an der Kathode durch Bildung einer monomolekularen Inhibitorschicht vor dem Angriff durch korrosive Medien schützen.

Ein weiterer Vorteil der erfindungsgemäss zu verwendenden Korrosionsinhibitoren auf Basis eines Umsetzungsproduktes aus Aminen mit Säuren, besteht darin, dass diese Korrosionsinhibitoren salzartige Verbindungen sind, die praktisch nicht flüchtig sind und somit bei deren Verwendung nicht in die Atmosphäre freigesetzt werden.

Im Gegensatz zu den erfindungsgemäss einzusetzenden Korrosionsinhibitoren weisen die in der kanadischen Patentschrift 1 258 473 beschriebenen Korrosionsinhibitoren auf Basis von Alkanolaminen den Nachteil auf, dass die entsprechenden Alkanolamine zu den rein katodisch wirkenden Inhibitoren gehören. Des weiteren sind die dort beschriebenen Alkanolamine, insbesondere diejenigen, deren Dampfdruck im oberen Bereich der angegebenen Grenzen liegt, bei der Herstellung der Baustoffe aufgrund ihres unangenehmen Geruches sehr störend. Einige Alkanolamine können ausserdem in unerwünschter Art die Eigenschaften der Baustoffe, insbesondere von Betonen, verändern, und ausserdem gewähren, wie bereits erwähnt, Alkanolamine aufgrund ihres allmählichen Entweichens aus den Baustoffen, nur während relativ beschränkter Zeiträume einen Korrosionsschutz von Metallarmierungen.

Ein weiterer Gegenstand der vorliegenden Erfindung ist ein Verfahren zur Verhinderung der Korrosion von Metallen in Baustoffen, die anorganische Bindemittel und allenfalls weitere Bestandteile, ausgewählt aus der Gruppe umfassend Zuschlagstoffe und weitere Siliciumdioxyd enthaltende Materialien enthalten, wobei dieses Verfahren dadurch gekennzeichnet ist, dass man bei der Herstellung des Baustoffes das erfindungsgemässe Zusatzmittel in solchen Mengen zusetzt, dass der Korrosionsinhibitor auf Basis des Umsetzungsproduktes aus Aminen mit Säuren, in einer Menge von 0,01 bis 10 Gew.-%, bezogen auf das Gewicht des anorganischen Bindemittels vorhanden ist.

Gemäss einer bevorzugten Ausführungsart der Erfindung wird das erfindungsgemäß verwendete Zusatzmittel in einer solchen Menge dem Baustoff zugegeben, dass der Korrosionsinhibitor in einer Menge von 0,05 bis 5 Gew.-%, insbesondere 0,1 bis 3,0 Gew.-%, bezogen auf das anorganische Bindemittel, vorliegt.

Bei diesem Verfahren kann man das Zusatzmittel zur Verhinderung der Korrosion, vermischt mit dem anorganischen Bindemittel oder vermischt mit den Zuschlagstoffen, zugeben oder man kann es der Mischung aus Bindemittel und Zuschlagstoffen beigeben.

Gemäss einer weiteren Ausführungsart des Verfahrens, kann jedoch das erfindungsgemäß verwendete korrosionshemmende Zusatzmittel getrennt während der Zugabe des Wassers zugesetzt werden oder vermischt mit dem Wasser zugesetzt werden oder es kann nach der Zugabe des Wassers dem Baustoff beigegeben werden.

Falls der Baustoff ein solcher ist, der als anorganisches Bindemittel Zement enthält, dann kann der erfindungsgemässe Korrosionsinhibitor dem Zement vor oder nach dem Mahlen des Zementklinkers zugesezt werden.

Die erfindungsgemäß verwendeten Zusatzmittel weisen ihre vorteilhaften Eigenschaften auch in solchen Baustoffen auf, die anorganische Bindemittel enthalten, welche Kalk, hydraulischer Kalk oder Gips sind.

Im Zusammenhang mit der Herstellung von Betonen sind die erfindungsgemäß verwendeten Zusatzmittel bei der Herstellung der unterschiedlichsten Betonarten verwendbar, beispielsweise bei der Herstellung von Leichtbeton, Beton, Schwerbeton, Gasbeton oder Schaumbeton.

Die erfindungsgemäss zu verwendenden Korrosionsinhibitoren auf Basis der salzartigen Umsetzungsprodukte aus Aminen mit Säuren, können vollständige Umsetzungsprodukte aus Aminen und Säuren oder unvollständige Umsetzungsprodukte aus Aminen und Säuren sein. Die in den Umsetzungsprodukten enthaltenen Aminkomponenten können pro Molekül eine oder mehrere Amingruppen aufweisen und auch die Säurekomponenten der Umsetzungsprodukte können einbasische oder mehrbasische Säuren, wie zum Beispiel Dicarbonsäuren sein. In den erfindungsgemäß verwendeten Korrosionsinhibitoren kann das Umsetzungsverhältnis zwischen der Aminkomponente und der Säurekomponente, bezogen auf die basischen, beziehungsweise sauren Gruppen, stöchiometrisch sein, oder es kann allenfalls ein Ueberschuss an der Aminkomponente vorliegen.

Ueberraschenderweise zeigte es sich, dass durch die erfindungsgemäss zu verwendenden Korrosionsinhibitoren die Bearbeitungseigenschaft und Gebrauchseigenschaften der Baustoffe gezielt gesteuert und den jeweiligen Anforderungen angepasst werden können. So kann durch die erfindungsgemäß verwendeten Korrosionsinhibitoren eine rasche Erhärtung und Festigkeitsentwicklung in den Vorfabrikaten, sowie bei der Verarbeitung der Baustoffe bei tiefen Temperaturen erreicht werden, oder es kann andererseits eine Verlängerung der Verarbeitungszeit bei Transportbeton erzielt werden und/oder eine Verhinderung des Ansteifens bei hohen Temperaturen erreicht werden.

In den abhängigen Ansprüchen, die auf die Verwendung der Zusatzmittel gerichtet sind, werden bevorzugte Aminkomponenten und bevorzugte Säurekomponenten der erfindungsgemäß verwendeten Zusatzmittel definiert und ferner bevorzugte weitere Bestandteile genannt, die zusätzlich zu dem Korrosionsinhibitor auf Basis des Umsetzungsproduktes aus Aminen mit Säuren enthalten sein können.

Insbesondere hat es sich als vorteilhaft erwiesen, wenn das Zusatzmittel als weitere Komponente solche Bestandteile enthält, welche die Eigenschaften eines anorganische Bindemittel enthaltenden Baustoffes während dessen Zubereitung oder dessen Gebrauches verändern. Als Beispiele für bevorzugte zusätzliche Komponenten, die in den erfindungsgemäß verwendeten Zusatzmitteln enthalten sein können, seien solche genannt, die aus der Gruppe ausgewählt sind, welche Abbindebeschleuniger, Abbindeverzögerer, Verflüssiger (Water-Reducers), Superverflüssiger (High-Range Water-Reducers), Luftporenbildner (Air entraining Agents), Dichtungsmittel (Waterproofing Agents) oder Mischungen aus zwei oder mehrerer der genannten Komponenten enthalten.

Ein weiterer Vorteil der erfindungsgemäss zu verwendenden Korrosionsinhibitoren auf Basis von Umsetzungsprodukten aus Aminen und Säuren, besteht darin, dass einige der bevorzugten Säurekomponenten, insbesondere solche aus der Gruppe der Dicarbonsäuren und/oder Hydroxycarbonsäuren, selbst als Verflüssiger wirken. Dadurch kann durch die Beigabe der erfindungsgemässen Korrosionsinhibitoren die benötigte Menge des Anmachwassers bei gleichbleibenden Verarbeitungseigenschaften gesenkt werden und somit eine besonders dichte Bindemittelmatrix erreicht werden.

Eine besonders dichte Bindemittelmatrix ist im Zusammenhang mit dem Korrosionsschutz von Metallen, beispielsweise Metallarmierungen, die in Kontakt mit Baustoffen stehen, von besonderer Bedeutung, weil durch eine extrem dichte Bindemittelmatrix die Diffusionsgeschwindigkeit von korrosiven Medien in dem Baustoff, beispielsweise Chloriden, vermindert wird. Es hat sich als vorteilhaft erwiesen, allenfalls zusätzlich zu den erfindungsgemäß verwendeten Korrosionsinhibitoren noch weitere Komponenten bei der Herstellung der Baustoffe zuzugeben, welche selbst eine Verdichtung der Bindemittelmatrix bewirken. Dazu gehören Verflüssiger, Superverflüssiger, sowie seit langem bekannte anorganische siliciumhaltige Zusatzstoffe, die eine Ausbildung einer dichten Bindemittelmatrix begünstigen, wie zum Beispiel pozzolanisch wirkende Stoffe, wie Flugaschen, Hochofenschlacken, Silica-fume und ähnliche.

Spezielle Ausführungsarten der Erfindung seien nun anhand der folgenden Beispiele näher erläutert:

### Beispiel 1: Steuerung der Betoneigenschaften

### Verkürzte Abbindezeiten: Vorfabrikation

| **Säure** | **Verarbeitungs zeit (h)** | **Druckfestigkeit N/mm**^{**2**} | |
|---|---|---|---|
| | | 1 Tag | 28 Tage |
| Nullversuch (Amin) | 3.5 | 22.6 | 60.1 |
| Salpetersäure 65% | 2.5 | 26.6 | 63.0 |
| Schwefelsäure 96% | 3 | 23.3 | 62.1 |
| Milchsäure 90% | 2.5 | 24.0 | 67.7 |
| Benzoesäure/Milchsäure 1:3 | 2 | 26.1 | 69.0 |
| | | | |
| | | | |

- Versuchsbedingungen:: siehe unten

### Beispiel 2 : Steuerung der Betoneigenschaften

### Verlängerte Abbindezeiten: Transportbeton

| **Säure** | **Verarbeitungs zeit (h)** | **Druckfestigkeit N/mm**^{**2**} | |
|---|---|---|---|
| | | 1 Tag | 28 Tage |
| Nullversuch | 3.5 | 22.6 | 60.1 |
| Phenylphosphonsäure | 4 | 18.3 | 52.5 |
| Propionsäure | 4 | 17.2 | 63.1 |
| Sulphaminsäure | 4 | 18.7 | 63.9 |
| Benzoesäure | 4.5 | 16.6 | 57.1 |
| 0-Phosphorsäure | 11 | 1.7 | 64.6 |
| Weinsäure | 18 | 2.3 | 64.4 |
| Gluconsäure | 29 | - | 67.9 |

- Versuchsbedingungen:: (Bsp. 1 + 2) Standardmörtel nach SIA 215 1% Zusatz eines Sikament Superverflüssigers Neutralisiertes Amin : N,N-Dimethylethanolamin 3% Zusatz auf Zement, Säurezugabe bis pH 8.2

### Beispiel 3 :

### Potentiostatischer Belastungstest an Mörtelelektroden

- - Mörtelprisma:: Portlandzement, W/Z = 0.5, Zuschlagstoffe 0-6 mm 3% CaCl₂ Zusatz, Korrosionsinhibitor
- - Stahlelektrode: (entfettet, poliert) : 1 = 10.5 cm, d = 0.7 cm Zentriert in Mörtelprismen 4x4x16 cm eingebaut (SIA 215).
Die potentiostatischen Messungen erfolgten mit Hilfe der üblichen Drei-Elektroden-Anordnung (Mörtelelektrode, platinierte Hilfselektrode, Referenz (SCE) in 5% NaCl-Lösung.
Belastung während 24h, angelegte Spannung konstant gegen SCE (- 200 mV), es wird der resultierende Stromfluss gemessen.

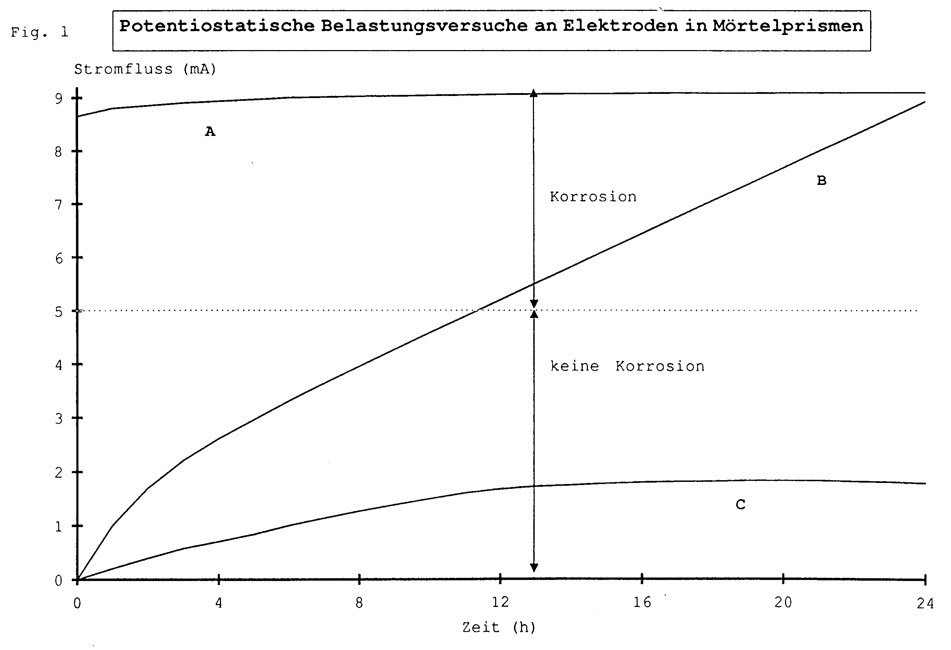

### Resultat siehe Figur 1

### Legende:

A) ohne Inhibitorzusatz
B) kunststoffvergüteter Zementmörtel (SBR Latex, 8% auf Zement)
C) 2% Inhibitor (Dicyclohexylammoniumnitrat)

### Beispiel 4 :

### Galvanodynamische Polarisation

Dargestellt sind durch galvanodynamische Polarisation um das Ruhepotential erhaltene Stromdichte - Potentialkurven. Als Prüfmedien dienten 2% ige Lösungen der Inhibitoren A - D unter Zugabe von 0.09 m/l NaCl und 1.5 ml 0.5 molarer KOH. Die Messungen erfolgten in einer Messzelle mit Hilfe einer Drei-Elektroden-Anordnung (St37-Stahl-Arbeitselektrode, gesättigte Kalomel-Referenzelektrode (SCE) mit Lugginkapillare, Platin Gegenelektrode ).
Die Stromdichte - Potentialkurven wurden mittels einer CAMEC II Station der Firma MPWS gesteuert und registriert.

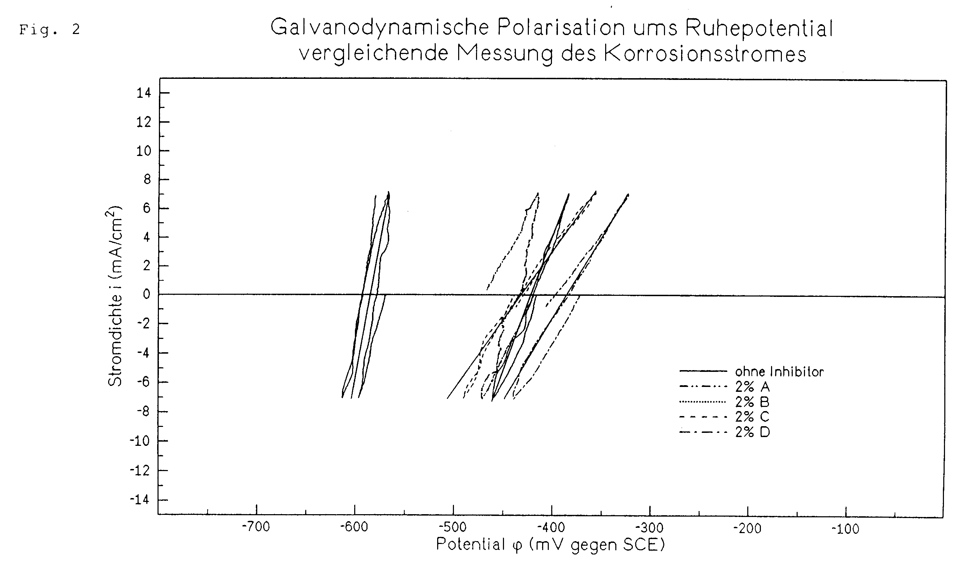

### Resultat siehe Figur 2

### Legende:

A) Benzylammoniumbenzoat
B) Benzylammoniumbenzoat + Morpholin
C) Benzylammoniumbenzoat + Diethylentriamin
D) Methylcyclohexylammoniumbenzoat

### Beispiel 5 :

### Wasserdichter Beton gem. DIN 1048 / Reduktion der Anmachwassermenge

| | **Dosierung %** | **Wasserreduktion %** | **Eindringtiefe** |
|---|---|---|---|
| | | | |
| Nullversuch | - | - | 16 cm |
| Inhibitor E | 0.2 | 3.2 | 8.1 cm |
| " | 0.4 | 4.7 | 6.8 cm |
| " | 1 | 8.2 | 4.5 cm |

### Betonrezeptur:

300 kg/m3 Portlandzement W/Z = 0.50
Sand: 32% Sand 0/4
Kies: 68% Kies 4/8
Inhibitor E: N,N- Methyldiethanolamingluconat, 3% Zusatz auf Zement

### Beispiel 6 :

### Hochdichter Beton / Reduktion der Kapillarporosität

| **Betontyp** | 0-Beton | 1% Superverflüssiger | 1.5% Superverfl. 8.5% Silicafume |
|---|---|---|---|
| **Wasserreduktion** | **-** | **13.2%** | **14.6 %** |
| **Kapillarporosität %** | **100%** | **80.2%** | **66.3%** |

### Betonrezeptur:

300 kg/m3 Portlandzement W/Z = 0.50
Sand: 32% Sand 0/4
Kies: 68% Kies 4/8
Inhibitor: 0.5% N,N-Dimethylethanolamin + Benzoesäure bezogen auf Zement
Superverflüssiger: Melamin-polykondensationsprodukt
Prüfmethode: Porosität nach SIA 162/1
   - 5 verschiedene Borkerne h=50 mm, d=50 mm
   - Bestimmung der Frostbeständigkeit des Festbetons durch Saugversuche und Ermittlung der kritischen sowie maximalen Sättigung
   - Vergleich von durch kapillarem Saugen nicht füllbarem Porenraum mit dem freien Porenraum bei kritischem Wassergehalt.

## Patentansprüche

1. Verwendung eine salzartigen Verbindung aus Aminen und Säuren als Korrosionsinhibitor in Zusatzmitteln zur Verhinderung der Korrosion von Metallen in Baustoffen, die anorganische Bindemittel enthalten, dadurch gekennzeichnet, dass das Zusatzmittel den Baustoffen bei der Herstellung des Baustoffes, zugesetzt wird, und die salzartige Verbindung bei deren Verwendung nicht in die Atmosphäre freigesetzt wird

2. Verwendung gemäss Anspruch 1, dadurch gekennzeichnet, dass die Aminkomponente des Korrosionsinhibitors ein primäres und/oder sekundäres und/oder tertiäres Amin ist, in welchem an das Stickstoffatom aliphatische und/oder aromatische und/oder cycloaliphatische Reste gebunden sind oder das Stickstoffatom der Auinkomponente einen Teil einer heterocyclischen Struktur darstellt und wobei in der Aminkomponente des Korrosionsinhibitors eine oder mehrere Aminogruppen vorhanden sind.

3. Verwendung gemäss Anspruch 1 oder 2, dadurch gekennzeichnet, dass die Aminkomponente des Korrosionsinhibitors in ihrem Molekül noch mindestens eine Hydroxygruppe aufweist, wobei bevorzugte Hydroxygruppen aufweisende Aminkomponenten solche primäre, sekundäre oder tertiäre aliphatische Amine sind, die pro Molekül mindestens eine Alkanolamingruppierung enthalten.

4. Verwendung gemäss einem der Ansprüche 1 bis 3, dadurch gekennzeichnet, dass die Aminkomponente des Korrosionsinhibitors mindestens ein Amin enthält, das aus der Gruppe ausgewählt ist, welche die folgenden Amine umfasst:
Cyclohexylamin
Dicyclohexylamin
N-Methyl-cyclohexylamin
N,N-Dimethyl-cyclohexylamin
N-Benzyl-dimethylamin
Hexymethylentetramin
Triethyltetramin
Diethylentriamin
Ethylendiamin
N,N-Dimethylethanolamin
N-Methyl-diethanolamin
Mono-, Di-, Tri-ethanolamin
Piperazin
Morpholin
Guanidin,
sowie Derivate der genannten Amine.

5. Verwendung gemäss einem der Ansprüche 1 bis 4, dadurch gekennzeichnet, dass die Säurekomponente des Korrosionsinhibitors eine einbasische oder mehrbasische anorganische oder organische Säure ist, und dass in dem Umsetzungsprodukt aus Amin und Säure ein stöchiometrisches Verhältnis der beiden Komponenten oder ein Ueberschuss an der Aminkomponente vorliegt.

6. Verwendung gemäss einem der Ansprüche 1 bis 5, dadurch gekennzeichnet, dass die Säurekomponente des Korrosionsinhibitors aus der Gruppe solcher Säuren ausgewählt ist, die selbst eine korrosionsvermindernde Wirkung aufweisen und/oder eine betonverflüssigende Wirkung besitzen.

7. Verwendung gemäss einem der Ansprüche 1 bis 6, dadurch gekennzeichnet, dass die Säurekomponente des Korrosionsinhibitors eine solche ist, die mit Calciumionen schwer lösliche oder unlösliche Verbindungen bildet und/oder die Säurekomponente des Korrosionsinhibitors mit Calciumionen Komplexe oder Chelate bildet.

8. Verwendung gemäss einem der Ansprüche 1 bis 7, dadurch gekennzeichnet, dass die Säurekomponente des Korrosionsinhibitors aus der Gruppe von Säuren ausgewählt ist, welche die folgenden einbasischen oder mehrbasisischen anorganischen oder organischen Säuren umfasst:
Salpetersäure
Schwefelsäure
Phosphorsäure
Pyrophosphorsäure
Phosphonsäuren
Benzoesäure
Aminobenzoesäure
Sulfanilsäure
Salicylsäure
Sebazinsäure
Oelsäure
Linolsäure
Adipinsäure
Tetrahydroxiadipinsäure
Milchsäure
Weinsäure
Citronensaure
Glukonsäure
Heptonsäure und
Ascorbinsäure.

9. Verwendung gemäss einem der Ansprüche 1 bis 8, dadurch gekennzeichnet, dass das Zusatzmittel zusätzlich zu dem Korrosionsinhibitor ein festes und/oder ein flüssiges Trägermaterial enthält und dass der Korrosionsinhibitor in flüssigen Trägermaterialien gelöst und/oder dispergiert und/oder an festen Trägermaterialien absorbiert ist, wobei als flüssiges Trägermaterial Wasser, wässrige Lösungen oder wässrige Dispersionen anorganischer und/oder organischer Teilchen bevorzugt sind, und als feste Trägermaterialien anorganische Bindemittel und/oder feste Bestandteile von Baustoffen bevorzugt sind.

10. Verwendung gemäss Anspruch 9, dadurch gekennzeichnet, dass das Zusatzmittel als festes Trägermaterial ein anorganisches Bindemittel enthält, das aus der Gruppe ausgewählt ist, die Zement, Kalk, hydraulischen Kalk und Gips umfasst, und/oder einen anorganischen Feststoff enthält, der aus der Gruppe ausgewählt ist, die Flugasche, Hochofenschlacke, Puzzolane, feinverteilte Kieselsäure, insbesondere Silica-Fume, gebrannten Oelschiefer, Metakaolin und Sand umfasst.

11. Verwendung gemäss einem der Ansprüche 1 bis 10, dadurch gekennzeichnet, dass das Zusatzmittel zusätzlich zu dem Korrosionsinhibitor eine weitere Komponente enthält, welche die Eigenschaften eines anorganische Bindemittel enthaltenden Baustoffes während dessen Zubereitung oder dessen Gebrauches verändert, insbesondere eine Komponente, welche aus der Gruppe ausgewählt ist, die Abbindebeschleuniger, Abbindeverzögerer, Verflüssiger, Superverflüssiger, Luftporenbildner und/oder Dichtungsmittel umfasst.

12. Verwendung gemäss einem der Ansprüche 1 bis 11, dadurch gekennzeichnet, dass das anorganische Bindemittel Zement ist.

13. Verfahren zur Verhinderung der Korrosion von Metallen in Baustoffen, wobei die Metalle in Kontakt mit anorganischen Bindemitteln und allenfalls weiteren Bestandteilen der Baustoffe, ausgewählt aus der Gruppe umfassend Zuschlagstoffe und weitere Siliciumdioxyd enthaltende Materialien, stehen, dadurch gekennzeichnet, dass man bei der Herstellung des Baustoffes ein Zusatzmittel gemäss Anspruch 1 in einer solchen Menge zusetzt, dass der Korrosionsinhibitor auf Basis der salzartigen Verbindung aus Amine mit Säuren in einer Menge von 0,01 bis 10 Gew.-%, bezogen auf das Gewicht des anorganischen Bindemittels, vorhanden ist.

14. Verfahren nach Anspruch 13, dadurch gekennzeichnet, dass man als Zusatzmittel zur Verhinderung der Korrosion eines gemäss einem der Ansprüche 2 bis 11 zugibt.

15. Verfahren gemäss Anspruch 13 oder 14, dadurch gekennzeichnet, dass man das Zusatzmittel zur Verhinderung der Korrosion mit dem anorganischen Bindemittel vermischt, zusetzt oder der Mischung aus Bindemittel und Zuschlagstoffen zugibt, oder dass man das Zusatzmittel während oder nach der Zugabe des Wassers bei der Herstellung des Baustoffes zusetzt.

16. Verfahren nach Anspruch 15, dadurch gekennzeichnet, dass man das Zusatzmittel einem Baustoff zusetzt, der als anorganisches Bindemittel Zement enthält, wobei der Korrosionsinhibitor vor oder nach dem Mahlen des Zementklinkers zugesetzt wird.

17. Verfahren gemäss einem der Ansprüche 13 bis 16, dadurch gekennzeichnet, dass man das Zusatzmittel zur Verhinderung der Korrosion bei der Herstellung von Leichtbeton, Beton, Schwerbeton, Gasbeton oder Schaumbeton zusetzt.

## Claims

1. Use of a salt-like compound of amines and acids as corrosion inhibitor in additives for inhibiting the corrosion of metals in construction materials which contain inorganic binders, characterised in that this additive is added to the construction materials during the production of the construction material, and in that the salt-like compound during its use is not liberated into the atmosphere.

2. Use according to claim 1, characterised in that the amine component of the corrosion inhibitor is a primary and/or secondary and/or tertiary amine in which aliphatic and/or aromatic and/or cycloaliphatic residues are bonded to the nitrogen atom or the nitrogen atom of the amine component is a part of a heterocyclic structure and in which one or more amino groups are present in the amine component of the corrosion inhibitor.

3. Use according to claim 1 or 2, characterised in that the amine component of the corrosion inhibitor also includes in its molecule at least one hydroxy group, preferred amino components comprising hydroxy groups being those primary, secondary or tertiary aliphatic amines which contain at least one alkanol amine group per molecule.

4. Use according to one of claims 1 to 3, characterised in that the amine component of the corrosion inhibitor contains at least one amine which is selected from the group which comprises the following amines:
cyclohexylamine,
dicyclohexylamine,
N-methyl-cyclohexylamine,
N,N-dimethyl-cyclohexylamine,
N-benzyl-dimethylamine,
hexylmethylene-tetramine,
tiethyl-tetramine,
diethylene-triamine,
ethylene-diamine,
N,N-dimethyl-ethanolamine,
N-methyl-diethanolamine,
mono-, di-, tri-ethanolamine,
piperazine,
morpholine,
guanidine,
as well as derivatives of the stated amines.

5. Use according to one of the claims 1 to 4, characterised in that the acid component of the corrosion inhibitor is a monobasic or polybasic inorganic or organic acid, and that in the reaction product of the amine and the acid there is present a stoichiometric ratio of the two components or an excess of the amine component.

6. Use according to one of the claims 1 to 5, characterised in that the acid component of the corrosion inhibitor is selected from the group of those acids which themselves have a corrosion inhibiting activity and/or a concrete-fluidising action.

7. Use according to one of the claims 1 to 6, characterised in that the acid component of the corrosion inhibitor is such as to form with calcium ions low-solubility or insoluble compounds and/or the acid component of the corrosion inhibitor forms complexes or chelates with calcium ions.

8. Use according to one of claims 1 to 7, characterised in that the acid component of the corrosion inhibitor is selected from the group of acids which comprises the following monobasic or polybasic inorganic or organic acids:
nitric acid,
sulfuric acid,
phosphoric acid,
pyrophosphoric acids,
phosphonic acid,
benzoic acid,
aminobenzoic acid,
sulfanilic acid,
salicylic acid,
sebacic acid,
oleic acid,
linoleic acid,
adipic acid,
tetrahydroxy-adipic acid,
lactic acid,
tartaric acid,
citric acid,
gluconic acid,
heptonic acid and
ascorbic acid.

9. Use according to one of the claims 1 to 8, characterised in that the additive contains in addition to the corrosion inhibitor a solid and/or a liquid carrier material and that the corrosion inhibitor is dissolved and/or dispersed in liquid carrier materials and/or absorbed on solid carrier materials, water, aqueous solutions or aqueous dispersions of inorganlc and/or organic particles being preferred as the liquid carrier material, and inorganic binders and/or solid constituents of construction materials being preferred as solid carrier materials.

10. Use according to claim 9, characterised in that the additive contains as a solid carrier material an inorganic binder selected from the group comprising cement, lime, hydraulic lime and gypsum and/or containes an inorganic solid material selected from the group comprising fly ash, blast furnace slag, puzzolanes, finely divided silica, in particular silica fume, burnt oil shale, metakaoline and sand.

11. Use according to one of the claims 1 to 10, characterised in that the additive contains further to the corrosion inhibitor a further component which alters the properties of a construction material which contains an inorganic binder during the process of its preparation or its use, especially a component selected from the group which includes the setting-accelerators, setting-retarders, fluidisers, super-fluidisers, air-entraining agents and/or sealing media.

12. Use according to one of the claims 1 to 11, characterised in that the inorganic binder is cement.

13. Process for inhibiting the corrosion of metals in construction materials, the metals being in contact with inorganic binders and possibly further components of the construction materials, selected from the group comprising aggregates and further materials containing silica, characterised in that during the preparation of the construction material there is added an additive according to claim 1 in such an amount that the corrosion inhibitor on the basis of the salt-like compound of amines with acids is present in an amount of 0,01 to 10 % by weight, referred to the weight of the inorganic binder.

14. Process according to claim 13, characterised in that an additive for inhibiting the corrosion as defined in one of the claims 2 to 11 is added.

15. Process according to claim 13 or 14 characterised in that the additive for preventing the corrosion is added in a form mixed with the inorganic binder or is added to the mixture of binder and aggregates, or that the additive is added during the preparation of the construction material during or after the addition of the water.

16. Process according to claim 15, characterised in that the additive is added to a construction material which comprises cement as the inorganic binder, the corrosion inhibitor being added before or after the grinding of the cement clinker.

17. Process according to one of the claims 13 to 16, characterised in that the additive for inhibiting the corrosion is added in a procedure for preparing light-weight concrete, concrete, dense concrete, aerated concrete or porous concrete.

## Revendications

1. Utilisation d'un composé salin à partir d'amines et d'acides comme inhibiteur de corrosion dans des additifs pour empêcher la corrosion des métaux dans des matériaux de construction contenant des liants inorganiques, caractérisée en ce que l'additif est rajouté aux matériaux de construction lors de la fabrication du matériau de construction, et que le composé salin n'est pas dégagé à l'atmosphère lors de son utilisation.

2. Utilisation suivant la revendication 1, caractérisée en ce que la composante aminée de l'inhibiteur de corrosion est une amine primaire et/ou une amine secondaire et/ou une amine tertiaire, dont des groupes aliphatiques et/ou aromatiques et/ou cycloaliphatiques sont attachés à l'atome d'azote ou dont l'azote de la composante d'amine représente une partie d'une structure hétérocyclique et dont dans la composante aminée de l'inhibiteur de corrosion, se trouvent un ou plusieurs groupes amino.

3. Utilisation suivant la revendication 1 ou 2, caractérisée en ce que la composante aminée de l'inhibiteur de corrosion contient dans sa molécule encore au moins un groupe hydroxyle, dont des composantes aminées ayant des groupes hydroxyles sont de préférence des amines aliphatiques primaires, secondaires ou tertiaires qui contiennent par molécule au moins un groupe d'alcanolamine.

4. Utilisation suivant l'une des revendications 1 à 3, caractérisée en ce que la composante aminée de l'inhibiteur de corrosion contient au moins une amine qui est sélectionnée du groupe contenant les amines suivantes:
cyclohexylamine
dicyclohexylamine
N-methyle cyclohexylamine
N,N-dimethyle cyclohexylamine
N-benzyle dimethylamine
hexyl methylène tétramine
triethyle tétramine
diethylène triamine
ethylène diamine
N,N-dimethylethanolamine
N-methyldiethanolamine
mono-, di-, tri-ethanolamine
pipérazine
morpholine
guanidine
ainsi que des dérivés des amines mentionnées.

5. Utilisation suivant l'une des revendications 1 à 4, caractérisée en ce que la composante acide de l'inhibiteur de corrosion est un acide inorganique ou un acide organique monobasique ou multibasique et que, dans le produit de la réaction entre l'amine et l'acide, il y a des proportions stoechiométriques des deux composantes ou un excédent de la composante aminée.

6. Utilisation suivant l'une des revendications 1 à 5, caractérisée en ce que la composante acide de l'inhibiteur de corrosion est sélectionnée du groupe des acides, qui ont eux-mêmes un effet anti-corrosif et/ou un effet fluidifiant sur le béton.

7. Utilisation suivant l'une des revendications 1 à 6 caractérisée en ce que la composante acide de l'inhibiteur de corrosion est une de celles qui forment avec des ions de calcium des composés difficilement solubles ou bien insolubles et/ou la composante acide de l'inhibiteur de corrosion forme des complexes ou des chélates avec des ions de calcium.

8. Utilisation suivant l'une des revendications 1 à 7, caractérisée en ce que la composante acide de l'inhibiteur de corrosion est sélectionnée du groupe des acides comprenant les acides inorganiques ou organiques monobasiques ou multibasiques suivants:
acide nitrique
acide sulphurique
acide phosphorique
acide pyrophosphorique
acides phophoniques
acide benzoïque
acide aminobenzoïque
acide sulfanilique
acide salicylique
acide sébacique
acide oléique
acide linoléique
acide adipique
acide tétrahydroxyadipique
acide lactique
acide tartarique
acide citrique
acide glucuronique
acide héptonique
acide ascorbique

9. Utilisation suivant l'une des revendications 1 à 8, caractérisée en ce que l'additif contient en plus de l'inhibiteur de corrosion un matériel de support solide et/ou un matériel de support liquide et que l'inhibiteur de corrosion est dissous dans des matériaux de supports liquides et/ou dispersé et/ou absorbé par des matériaux de supports solides, alors que l'eau, des solutions aqueuses ou des dispersions aqueuses de particules inorganiques et/ou organiques sont préférées comme matériel de support liquide, et que des liants inorganiques et/ou des composantes solides de matériaux de construction sont préférés comme matériaux solides.

10. Utilisation suivant la revendication 9, caractérisée en ce que l'additif contient comme matériel de support solide un liant inorganique sélectionné du groupe renfermant le ciment, la chaux, la chaux hydraulique et du gypse, et/ou il contient un produit solide inorganique sélectionné du groupe contenant de l'escarbille (la cendre volante), de la scorie de haut fourneau, des puzzolanes, de la silice fine, particulièrement du silica fume, du schiste bitumineux calciné, du métacaoline et du sable.

11. Utilisation suivant l'une des revendications 1 à 10, caractérisée en ce que l'additif contient en plus de l'inhibiteur de corrosion une composante supplémentaire, qui change les propriétés d'un matériau contenant un liant inorganique pendant sa préparation ou son utilisation, plus particulièrement une composante qui est sélectionnée du groupe comprenant des accélérateurs de prise, des ralentisseurs de prise, des fluidifiants, des fluidifiants de haut performance, des agents formant des pores et/ou d'autres agents d'étanchéité.

12. Utilisation suivant l'une des revendications 1 à 11, caractérisée en ce le liant inorganique est le ciment.

13. Procédé pour empêcher la corrosion des métaux dans les matériaux de construction dont les métaux sont en contact avec des liants inorganiques et au besoin avec d'autres composantes des matériaux sélectionnées du groupe renfermant des charges et d'autres matériaux contenant du dioxide de silicium, caractérisé en ce qu'un additif selon la revendication 1 est rajouté lors de la production du matériau dans une telle quantité que l'inhibiteur de corrosion basé sur le composé salin a partir des amines et des acides est présent dans une quantité de 0.01 à 10 % en poids relatif au poids du liant inorganique.

14. Procédé suivant la revendication 13, caractérisé en ce que l'on rajoute comme additif pour empêcher la corrosion l'un des additifs suivant les revendications 2 à 11.

15. Procédé suivant la revendication 13 ou 14, caractérisé en ce que l'additif pour empêcher la corrosion est mélangé ou rajouté au liant inorganique, ou rajouté au mélange du liant et des charges, ou bien en ce que l'on rajoute l'additif pendant ou après l'addition d'eau au matériau de construction lors de la fabrication.

16. Procédé suivant la revendication 15, caractérisé en ce que l'on rajoute l'additif au matériau de construction, qui contient comme liant inorganique du ciment, dont l'inhibiteur de corrosion est rajouté avant ou après le broyage de la brique recuite de ciment.

17. Procédé suivant l'une des revendications 13 à 16, caractérisé en ce que l'on rajoute l'additif pour empêcher la corrosion lors de la fabrication du béton léger, du béton, du béton lourd, du béton-gaz, ou du béton-mousse.
